# EUROPÄISCHE PATENTANMELDUNG

(11) **EP 4 789 531 A1**
(43) Veröffentlichungstag der Anmeldung: **12.08.2026**
(21) Anmeldenummer: 25156052.0
(22) Anmeldetag: 05.02.2025
(51) Int. Cl.: A01D 80/02

(54) **BANDRECHEN**

(71) Anmelder: Rahm, Andreas, 6277 Zellberg (AT)
(72) Erfinder: Rahm, Andreas, 6277 Zellberg (AT)
(74) Vertreter: Schwarz & Partner Patentanwälte GmbH

(57) **Zusammenfassung**

Fahrbarer Bandrechen, umfassend zumindest zwei Drehwellen, wobei die Drehachsen der Drehwellen entlang der Fahrtrichtung des Bandrechens ausgerichtet sind, zumindest ein Endlosband (2, 2`), wobei das Endlosband (2, 2') um die zwei Drehwellen drehbar gelagert ist, mehrere Zinken (6), wobei die Zinken (6) an Zinkenhaltern (8) befestigt sind, und obere und untere Zinkenträger (9, 9'), mit denen die Zinkenhalter (8) am Endlosband (2) befestigt sind, dadurch gekennzeichnet, dass die oberen Zinkenträger (9) jeweils eine Arretiervorrichtung (12) aufweisen, welche eine Nocke (40) und ein Einlaufblech (27) aufweist und mit welcher die am Zinkenhalter (8) befestigten Zinken (6) in einer aufrechten Position arretierbar sind, wobei an zumindest einer Drehwelle eine Auslösevorrichtung für die Arretiervorrichtung (12) vorgesehen ist, mit welcher die Arretiervorrichtung (12) derart lösbar ist, dass im gelösten Zustand das Einlaufblech (27) durch die Auslösevorrichtung schwenkbar ist, sodass die Nocke (40) in eine Führung (42) in der Arretiervorrichtung (12) einführbar ist und die Nocke (40) im gelösten Zustand entlang der Führung (42) bewegbar ist, während im arretierten Zustand die Nocke (40) in eine Nut (44), welche an der Arretiervorrichtung (12) angeordnet ist, einrastbar ist.

## Beschreibung

Die vorliegende Erfindung betrifft einen Bandrechen, umfassend zumindest zwei Drehwellen, wobei die Drehachsen der Drehwellen entlang der Fahrtrichtung des Bandrechens ausgerichtet sind, zumindest ein Endlosband, wobei das Endlosband um die zwei Drehwellen drehbar gelagert ist, mehrere Zinken, wobei die Zinken an Zinkenhaltern befestigt sind und Zinkenträger, mit denen die Zinkenhalter am Endlosband befestigt sind.

### HINTERGRUND DER ERFINDUNG

Ein Bandrechen der eingangs genannten Gattung wird beispielsweise in AT 260 599 B offenbart. Mit einem solchen Bandrechen kann geschnittenes Heu, welches am Untergrund liegt, mit den Zinken seitlich vom Bandrechen abgelegt werden. Das Heu kann durch den Bandrechen entweder nur zum Lüften gewendet oder als Schwad seitlich abgelegt werden. Dabei kann das Heu nur auf einer Seite des Bandrechens abgelegt werden.

Die Zinken des Bandrechens stehen in einen annähernd rechten Winkel vom Endlosband ab, um das Heu ideal aufgreifen zu können. Beim Umlaufen des Endlosbands um die Drehwellen müssen die Zinken allerdings abschnittsweise angelegt werden, da sonst das Heu seitlich nicht korrekt abgelegt werden kann und gegebenenfalls wieder mitgeführt wird.

Der Stand der Technik benötigt zum Anlegen der Zinken aufwändige Mechanismen. Darüber hinaus ist mit den bekannten Anlegemechanismen für die Zinken kein Wechsel der Drehrichtung der Drehwellen möglich. Ein Ändern der Drehrichtung der Drehwellen ist jedoch erforderlich, um den Bandrechen in einem Gelände mit Gefälle verwenden zu können. Je nach Gefälle des Geländes und Betriebsrichtung des Bandrechens muss die Drehrichtung der Drehwellen so geändert werden, dass das Endlosband das Heu auf der Talseite ablegt. Da dies beim Stand der Technik nicht ohne aufwändigen Umbau möglich ist, muss bei der Bedienung der Bandrechen vor- und rückwärts bedient werden, was umständlich ist und bei Hanglangen zusätzliche Gefahrensituationen hervorruft, da beim Rückwärtsgehen die Kontrolle über den Bandrechen verloren gehen kann. Auch besteht beim Rückwärtsgehen der Nachteil, dass man über das bereits trockene, rutschige Heu gehen muss, was zu Unfällen führen kann und die Qualität des Heus als Futter durch das Überfahren mit der Zugmaschine beeinträchtigen kann. Außerdem ist ein verlässliches Anlegen der Zinken nicht immer gegeben.

### KURZBESCHREIBUNG DER ERFINDUNG

Aufgabe der vorliegenden Erfindung ist die Bereitstellung eines Bandrechens, mit dem die genannten Nachteile vermieden werden, und vor allem ein präzises und zuverlässiges Anlegen der Zinken gewährleistet ist.

Gelöst wird diese Aufgabe durch einen fahrbarer Bandrechen, umfassend zumindest zwei Drehwellen, wobei die Drehachsen der Drehwellen entlang der Fahrtrichtung des Bandrechens ausgerichtet sind, zumindest ein Endlosband, wobei das Endlosband um die zwei Drehwellen drehbar gelagert ist, mehrere Zinken, wobei die Zinken an Zinkenhaltern befestigt sind, obere und untere Zinkenträger, mit denen die Zinkenhalter am Endlosband befestigt sind, dadurch gekennzeichnet, dass die oberen Zinkenträger jeweils eine Arretiervorrichtung aufweisen, welche eine Nocke und ein Einlaufblech umfasst und mit welcher die am Zinkenhalter befestigten Zinken in einer aufrechten Position arretierbar sind, wobei an zumindest einer Drehwelle eine Auslösevorrichtung für die Arretiervorrichtung vorgesehen ist, mit welcher die Arretiervorrichtung derart lösbar ist, dass im gelösten Zustand das Einlaufblech durch die Auslösevorrichtung schwenkbar ist, sodass die Nocke in eine Führung in der Arretiervorrichtung einführbar ist und die Nocke im gelösten Zustand entlang der Führung bewegbar ist, während im arretierten Zustand die Nocke in eine Nut, welche an der Arretiervorrichtung angeordnet ist, einrastbar ist.

Indem die Zinkenträger jeweils eine Arretiervorrichtung aufweisen, kann der Zinkenhalter in einer arretierten Position gehalten werden, in welcher die Zinken aufrecht ausgerichtet sind und von der Außenseite des Endlosbands abstehen. Sobald die Arretiervorrichtung die Auslösevorrichtung, welche vorzugsweise als Exzenterscheibe konfiguriert ist, überfährt, wird das Einlaufblech in die Arretiervorrichtung geschwenkt, sodass ein erleichtertes Einführen oder der korrekte Einlauf der Nocke in die Führung gegeben ist. Die Einschwenkrichtung des Einlaufblechs ist hierbei von der Laufrichtung des Endlosbands abhängig. Zudem greift die Auslösevorrichtung, wenn die Drehwelle in der passenden Position ist, zum Auslösen in die Arretiervorrichtung ein. Dadurch wird der jeweilige Zinkenhalter in eine gelöste Position gebracht. In der gelösten Position wird die Neigung der Zinken zum Endlosband verringert, bis sie am Endlosband anliegen.

Die Zinken werden so beim Umlaufen um die Drehwelle automatisiert durch die Auslösevorrichtung, welche vorzugsweise als Exzenterscheibe konfiguriert ist und die exzentrisch zur Drehwelle angeordnet ist, angelegt. So wird einerseits das Heu richtig aufgenommen und in gewünschter Weise abgelegt. Andererseits kann jederzeit die Drehrichtung der Drehwelle geändert werden, ohne dass es zu Problemen mit abstehenden Zinken kommt. Bevorzugt sind an beiden Drehwellen Auslösevorrichtungen angebracht.

Bevorzugt ist vorgesehen, dass die Arretiervorrichtung derart ausgebildet ist, dass sie selbsttätig in den arretierten Zustand übergeht, wenn die Auslösevorrichtung, welche als Exzenterscheibe konfiguriert ist, von der Arretiervorrichtung gelöst wird. Die Arretiervorrichtung ist also derart ausgebildet, dass sich die Arretiervorrichtung nur so lange im gelösten Zustand befindet, solange die Auslösevorrichtung mit der Arretiervorrichtung in Eingriff steht. Sobald die Auslösevorrichtung nicht mit der Arretiervorrichtung in Eingriff steht, geht die Arretiervorrichtung in den arretierten Zustand über.

In einer bevorzugten Ausführungsform ist vorgesehen, dass die Arretiervorrichtung im arretierten Zustand den Zinkenhalter mittels einer Druckfeder im Zinkenträger arretiert, wobei die Auslösevorrichtung eine Exzenterscheibe umfasst, die an der Drehwelle angeordnet ist und die mit Zapfen, bevorzugt zwei Zapfen, am Zinkenträger in Eingriff bringbar ist und dabei die Druckfeder drückt.

Die Zapfen können auf einfache Weise mit einer Druckfeder, die den Zinkenhalter am Zinkenträger arretiert gekoppelt werden. Wenn der Zapfen von der Auslösevorrichtung mit Kraft beaufschlagt wird, drückt der Zapfen die Druckfeder zusammen und spannt diese, sodass der Zinkenhalter, der im arretierten Zustand durch die Druckfeder gehalten wird, in einen nicht arretierten Zustand gebracht wird. Eine geeignete Auslösevorrichtung für diesen Zweck ist eine Exzenterscheibe, die einfach an der Drehwelle am Bandrechen eingebaut werden kann. Durch die Interaktion von Exzenterscheibe, Zapfen und Druckfeder erfolgt das Lösen der Arretierung des Zinkenhalters am Zinkenträger.

Der Querschnitt der Nut kann größer sein als der Querschnitt der Nocke, sodass die Nocke im arretierten Zustand in der Nut beweglich einrastbar ist. Solange die Exzenterscheibe über den Zapfen die Druckfeder spannt, bleibt der Zinkenhalter im nicht arretierten Zustand. Die Führung hält den Zinken im angelegten Zustand. Wenn aber die Exzenterscheibe mit dem Zapfen nicht mehr interagiert, geht die Druckfeder wieder in den ursprünglichen Zustand über. Dementsprechend kann durch die Arretiervorrichtung der am Zinkenhalter befestigte Zinken in einer Position gehalten werden, in welcher die Zinken aufrecht ausgerichtet sind und von der Außenseite des Endlosbands abstehen. Aufgrund des beweglichen Einrastens der Nocke befindet sich der Zinken in einer aufrechten und neigbaren Position, wobei der Zinken vorzugsweise bis zu 12° entlang der horizontalen Achse neigbar ist. Durch eine solche Position nehmen die Zinken im Betrieb eine leicht schleppende Position ein, wodurch der Boden und die Grasnarbe geschont werden.

In einer bevorzugten Ausführungsform ist die Nocke als Kurvenrolle ausgebildet. Durch die Verwendung einer Kurvenrolle als Nocke ist der Verschleiß der Nocke vermindert.

Die Führung weist bevorzugt eine Krümmung, vorzugsweise eine annähernd w-förmige oder ω-förmige Krümmung, auf, mit der die Nocke so geführt wird, dass der Zinkenhalter über die Führung der Nocke angelegt wird und anschließend wieder aufgerichtet wird.

Außerdem kann im arretierten Zustand das Einlaufblech mittels zwei Federn und einem Seil zurück in die Ausgangsposition geschwenkt werden, sodass das Einlaufblech in einer aufrechten Position an der Innenseite der Arretiervorrichtung absteht. Hierbei ist das Einlaufblech mit dem Seil verbunden, welches wiederum mit den beiden Federn verbunden ist. Das Seil ist vorzugsweise über ein Seilklemmblech am Einlaufblech fixiert. Über eine Seilrolle kann das Einlaufblech dann schwenkbar gelagert werden. Solange die Arretiervorrichtung über die Auslösevorrichtung fährt, ist das Einlaufblech in die Arretiervorrichtung eingeschwenkt und eine der beiden Federn ist gespannt, während die andere entspannt ist. Sobald die Arretiervorrichtung die Auslösevorrichtung verlässt oder die Arretiervorrichtung nicht mehr mit der Auslösevorrichtung interagiert, entspannt sich die gespannte Feder. Folglich bewirkt die Federkraft der sich entspannenden Feder, dass das Einlaufblech zurück in die Ausgangsposition geschwenkt wird. Die beiden Federn können dabei eine annähernd gleiche Federkonstante aufweisen. Dadurch ist einerseits eine aufrechte Position des Einlaufblechs möglich und andererseits kann ein Kräfteungleichgewicht zwischen den beiden Federn vermieden werden.

Damit der Bandrechen fahrbar ist, sind vorzugsweise Gleitmittel vorgesehen. Die Gleitmittel können Kufen umfassen. Vorzugsweise umfassen die Gleitmittel zumindest zwei Räder, wobei die Drehachse der Räder senkrecht zur Fahrtrichtung des Bandrechens angeordnet ist.

Der Bandrechen kann einen externen Antrieb aufweisen bzw. an einen externen Antrieb gekoppelt werden und so den Bandrechen bewegen und zusätzlich die Drehwellen antreiben. Ein externer Antrieb kann beispielsweise eine Zugmaschine umfassen.

Der Bandrechen kann aber auch selbst angetrieben sein, damit kann er sich selbständig fortbewegen und die Drehwellen drehen kann. Dazu kann der Bandrechen eine integrierte Antriebseinheit aufweisen. Weiters kann eine Lenkvorrichtung vorgesehen sein.

Weiters kann ein Seitenblech vorgesehen, welches seitlich des Endlosbands angeordnet ist. Dies ermöglicht generell eine bessere Ablage des Heus an der Seite. Bei entsprechender Anordnung kann mit einem solchen Seitenblech das Heu zu einer schmäleren Schwad abgelegt werden, was das Sammeln des Heus erleichtert.

Das Endlosband kann beispielsweise als Keilriemen ausgebildet sein. Bevorzugt sind zwei oder mehr voneinander beabstandete Endlosbänder vorgesehen. Das Endlosband bzw. die Endlosbänder können streifenförmig ausgebildet sein.

Aufgrund der hohen Kräfte, die am Endlosband und an den Drehwellen auftreten können, ist es vorteilhaft, wenn an der Drehwelle beabstandete Exzenterscheiben, vorzugsweise zwei beabstandete Exzenterscheiben, und beabstandete Zapfen, vorzugsweise zwei beabstandete Zapfen, vorgesehen sind. Das zweite paar Exzenterscheiben und das zweite paar Zapfen agieren wie ein erstes paar Exzenterscheiben und Zapfen und verbessern den Rundlauf um die Drehwellen. Damit können im Fall des Einsatzes von Druckfedern diese kleiner dimensioniert werden und die Kräfte auf das Endlosband werden verringert. Weiters kann das erste Paar Exzenterscheiben an einer ersten Drehwelle angeordnet sein, während ein zweites paar Exzenterscheiben an einer zweiten Drehwelle angeordnet ist.

Die Zinken können außerdem eine Federung aufweisen. Dadurch können Unebenheiten am Untergrund ausgeglichen werden, ohne dass es zu einem Abbrechen der Zinken kommt. Bevorzugt sind die Zinken paarweise angeordnet, wobei die Zinken besonders bevorzugt über eine Feder oder Doppelfeder miteinander verbunden sind.

### DETAILLIERTE BESCHREIBUNG DER ERFINDUNG

Details und Vorteile der Erfindung werden anhand der Figuren und der Figurenbeschreibung erläutert.
- Fig. 1: zeigt eine Explosionsdarstellung von Zinkenträger mit Zinkenhalter und Arretiervorrichtung.
- Fig. 2a und 2b: zeigen den Zinkenträger mit Zinkenhalter und die Arretiervorrichtung im arretierten Zustand in zwei Ansichten.
- Fig. 3a und 3b: zeigen den Zinkenträger mit Zinkenhalter und die Arretiervorrichtung im gelösten Zustand in zwei Ansichten.
- Fig. 4a bis 4c: zeigen die Arretiervorrichtung in drei Ansichten.
- Fig. 5a und 5b: zeigen den Zinkenhalter und die Nocke in zwei Ansichten.
- Fig. 6a und 6b: zeigen den Zinkenträger mit Zinkenhalter, die Arretiervorrichtung und die Auslösevorrichtung im gelösten Zustand in zwei Ansichten.
- Fig. 7a und 7b: zeigen einen Bandrechen in einer Ansicht von vorne (Fig. 7a) und von oben (Fig. 7b.

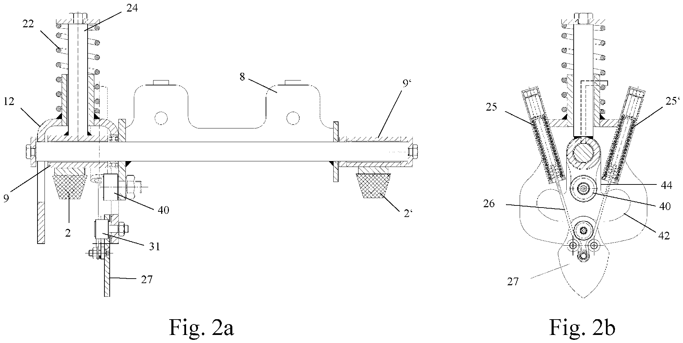

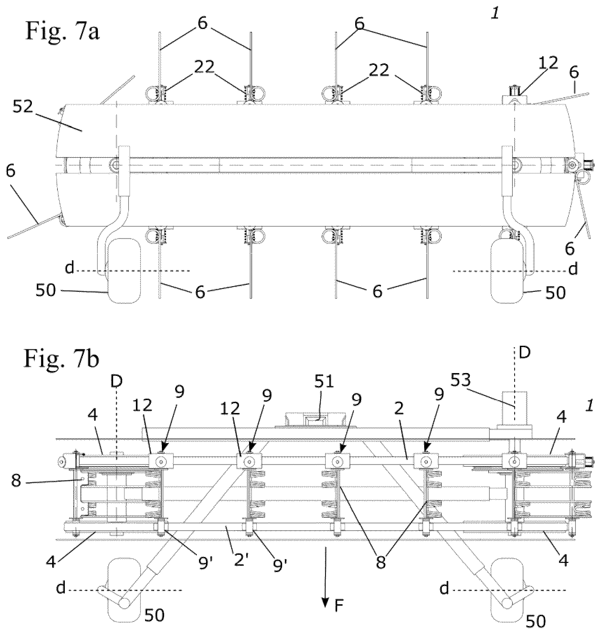

Alle Figuren beziehen sich auf dasselbe Ausführungsbeispiel, welches folglich anhand aller Figuren gemeinsam beschrieben wird. Gleiche Bauteile werden mit gleichen Bezugszeichen versehen und es wird davon abgesehen, zu jeder Figur sämtliche Bauteile noch einmal zu beschreiben, wenn diese Bauteile bereits zu einer vorherigen Figure erläutert wurden. Auch sind aus Gründen der Übersichtlichkeit nicht alle Bauteile in allen Figuren mit Bezugszeichen versehen. Ein fahrbarer Bandrechen 1 ist in den Fig. 7a und 7b in seiner Gesamtheit dargestellt, die Details betreffend Zinkenträger, Zinkenhalter und Arretiervorrichtung sind in den Fig. 2a bis 6c dargestellt.

Der Bandrechen 1 (Fig. 7a und 7b) weist eine Fahrtrichtung F auf, in welche der Bandrechen 1 im Normalbetrieb fahrbar ist. Für die Fahrbarkeit umfasst der Bandrechen 1 Gleitmittel in der Form von zwei Rädern 50 mit einer Drehachse d, wobei die zwei Räder 50 in diesem Fall auch lenkbar sind. Die Drehachsen d der Räder 50 sind im Normalzustand des Bandrechens 1 senkrecht zur Fahrtrichtung F angeordnet. Im Ausführungsbeispiel ist der Bandrechen 1 extern angetrieben. Dazu wird der Bandrechen 1 über eine Kupplung 51 mit einer nicht gezeigten Zugmaschine gekoppelt. Die Vorderseite des Bandrechens ist von einem Schutzblech 52 abgedeckt, welches den Bereich der Drehwellen 4 und der Endlosbänder 2 abdeckt. Die Drehachsen D der Drehwellen 4 sind parallel zur Fahrtrichtung F angeordnet.

Über einen Antrieb kann eine Drehwelle 4 in Rotation versetzt werden, wobei im Ausführungsbeispiel hierfür eine Wellenkupplung 53 vorgesehen ist, die mit einem Antrieb einer Zugmaschine koppelbar ist. Alternativ dazu kann auch ein anderer Antrieb, z.B. ein interner Antrieb mit einem Motor vorgesehen sein. Ein Paar der beiden Drehwellen 4 wird von der Zugmaschine über die Wellenkupplung 53 in Rotation versetzt, sodass die Drehwellen 4 und die Endlosbänder 2 in Drehbewegung versetzt werden. Wenn die Drehwellen 4 rotieren, laufen die Endlosbänder 2 in Rotationsrichtung des Antriebs um die Drehwellen 4 herum.

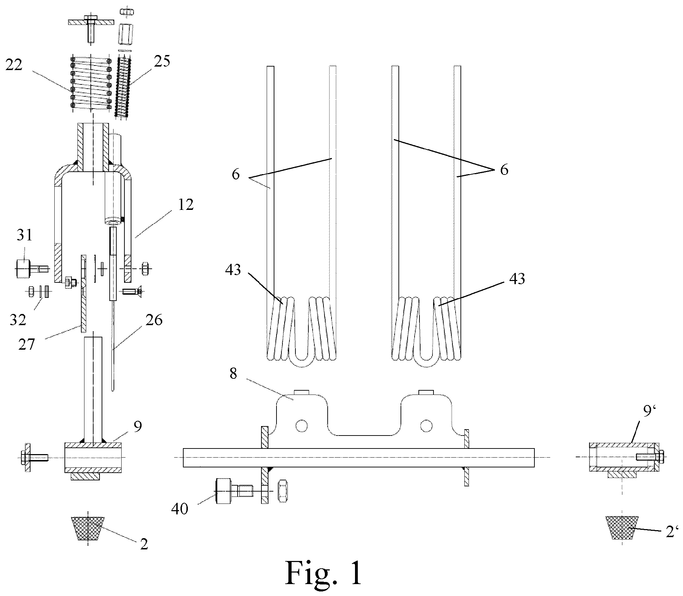

Im gezeigten Ausführungsbeispiel weist der Bandrechen 1 zwei Endlosbänder 2, 2' auf, welche über jeweils zwei Drehwellen 4 geführt werden. Die Endlosbänder 2, 2' sind hierbei als Keilriemen ausgebildet. Auf den Endlosbändern 2, 2' sind obere und untere Zinkenträger 9, 9' fixiert, wobei die oberen und unteren Zinkenträger 9, 9' jeweils auf einem Endlosband 2, 2' fixiert sind. Der am unteren Endlosband 2' fixierte Zinkenträger 9' dient dazu einen Zinkenhalter 8 am unteren Endlosband 2' zu fixieren und ein seitliches Abrutschen zu verhindern. Hinsichtlich der Lage ist der obere Zinkenträger 9, welcher am oberen Endlosband fixiert ist, entscheidend, da dieser eine Arretiervorrichtung 12 aufweist. Zwischen den oberen und unteren Zinkenträgern 9, 9' ist jeweils ein Zinkenhalter 8 aufgespannt, welcher wiederum zwei Paare Zinken 6 trägt. Dies ist in Fig. 1 verdeutlicht.

Des Weiteren sind um den Umfang der Endlosbänder 2, 2'herum mehrere Paare von Zinken 6 verteilt. Diese Paare an Zinken 6 sind auf gleicher Höhe auf den Endlosbändern 2, 2' über den Zinkenhalter 8 befestigt. In Fig. 1 ist erkennbar, dass der Zinkenhalter 8 zwei Fortsätze aufweist, an denen die Zinken 6 befestigbar sind. Die Zinken 6 können auch einzeln oder in mehrere Zinkenpaare angeordnet sein. Jedoch ist die Variante mit jeweils zwei Paaren Zinken 6 auf gleicher Höhe auf zwei Endlosbändern 2, 2' bevorzugt. Denn eine solche Anordnung sorgt für eine optimale Rechenleistung. Die Zinken 6 weisen zudem eine Federung auf, um Unebenheiten am Untergrund auszugleichen. Dazu sind die paarweise angeordneten Zinken 6 über eine Doppelfeder 43 miteinander verbunden.

An dem oberen Zinkenträger 9 ist zudem eine Arretiervorrichtung 12 vorgesehen. Die Arretiervorrichtung 12 hält im arretierten Zustand den Zinkenhalter 8 so, dass die am Zinkenhalter 8 befestigten Zinken 6 in einer aufrechten und neigbaren Position arretiert sind. In diesem arretierten Zustand stehen die Zinken 6 an der Außenseite des Endlosbands 2, 2' ab. Der arretierte Zustand von Zinkenträger 9, 9' mit Zinkenhalter 8 und Arretiervorrichtung 12 ist in Fig. 2a und 2b dargestellt.

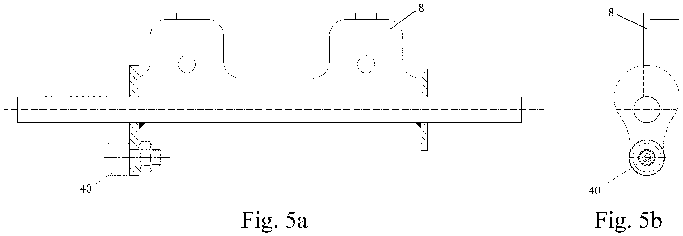

Die Arretiervorrichtung 12 arretiert im arretierten Zustand den Zinkenhalter 8 mittels einer Druckfeder 22 am oberen Zinkenträger 9. Der Zinkenhalter 8 weist eine Nocke 40 auf, welche als Kurvenrolle ausgebildet und im arretierten Zustand in einer Nut 44 einrastbar ist. Die als Kurvenrolle ausgebildete Nocke 40, welche am Zinkenhalter 8 angeordnet ist, ist im Detail in Fig. 5a und 5b dargestellt. Da der Querschnitt der Nut 44 größer ist als der Querschnitt der Nocke 40, kann die Nocke 40 beweglich in die Nut 44 einrasten. Dadurch ist es möglich, dass die Zinken 6 neigbar sind, wobei die Zinken vorzugsweise bis zu 12° entlang der horizontalen Achse neigbar sind.

Die Arretiervorrichtung 12 umfasst zudem ein Einlaufblech 27, welches über ein Seil 26 mit zwei Federn 25, 25' verbindbar ist. Ein erstes Ende des Seils 26 ist an der ersten Feder 25 fixiert, während ein zweites Ende des Seils 26 an der zweiten Feder 25' fixiert ist. Der annähernde Mittelpunkt des restlichen Seils 26 ist über ein Seilklemmblech 32 am Einlaufblech 27 arretiert, wobei das Seil 26 zwischen dieser Arretierung am Einlaufblech 27 und der jeweiligen Feder 25, 25' über eine Seilrolle 31 geführt wird. Die beiden Federn 25, 25' weisen vorzugsweise eine annähernd gleiche Federkonstante auf, sodass das Einlaufblech 27 im arretierten Zustand in einer aufrechten Position an der Innenseite der Arretiervorrichtung 12 absteht. Dies entspricht der Ausgangsposition des Einlaufblechs 27.

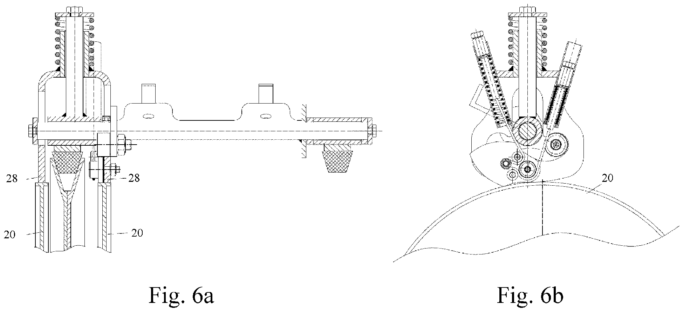

Über eine Exzenterscheibe 20, welche in Fig. 6b kreisförmig dargestellt ist und exzentrisch zur Drehwelle angeordnet ist, und einen Zapfen 28 ist die Arretiervorrichtung 12 vom arretierten in den gelösten Zustand überführbar. Bei Drehung der Drehwellen dreht sich das Endlosband 2, 2'. Sobald die Arretiervorrichtung 12 über die Drehwelle geführt wird, greift die Exzenterscheibe 20 über den Zapfen 28 in die Arretiervorrichtung 12 ein. Durch dieses Eingreifen wird die Arretiertiervorrichtung 12 bis zum höchsten Punkt der Exzenterscheibe 20 nach Außen gedrückt und somit wird die Druckfeder 22 gedrückt bzw. gespannt. Folglich wird die Druckfeder 22 von einem normalen Zustand in einen gedrückten Zustand gedrückt. Weiters ist am höchsten Punkt der Exzenterscheibe 20 die Druckfeder 22 am stärksten gespannt. Folglich legen sich die Zinken 6 an die Drehwelle an. Die Druckfeder 22 ist als Spiralfeder ausgebildet und weist in der Achse der Spiralfeder einen Stift 24 auf, der die Druckfeder 22 entlang der Achse stabilisiert. Zusätzlich wird das Einlaufblech 27 beim Überfahren der Exzenterscheibe 20 in die Arretiervorrichtung 12 eingeschwenkt, wobei die Einschwenkrichtung des Einlaufblechs von der der Laufrichtung des Endlosbands 2, 2' abhängig ist.

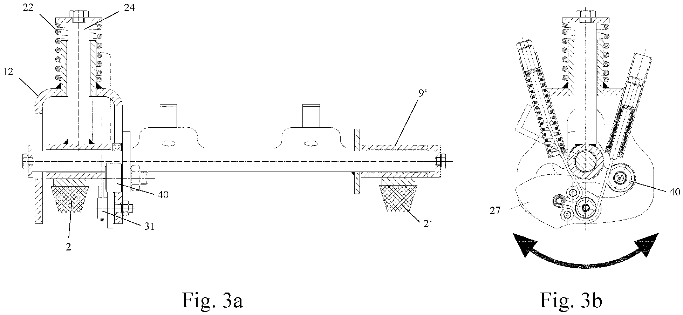

Im gelösten Zustand wird die Nocke 40, welche am Zinkenhalter 8 angeordnet ist, entlang einer Führung 42 in der Arretiervorrichtung 12 bewegt, wobei der korrekte Einlauf der Nocke 40 in die Führung 42 durch das eingeschwenkte Einlaufblech 27 ermöglicht wird. Dadurch kann der Zinkenhalter 8 verschwenkt werden, sodass die Zinken 6 am Zinkenhalter 8 angelegt werden. Mit der Exzenterscheibe 20 wird der Zinkenhalter 8 also von der arretierten Position in eine gelöste Position gebracht, wenn der Zinken 6 mit dem Endlosband 2, 2' über die Drehwelle geführt wird. Dieser gelöste Zustand des Zinkenträgers 9 mit Zinkenhalter 8 und Arretiervorrichtung 12 ist in Fig. 3a, 3b dargestellt.

Sobald die Exzenterscheibe 20 nicht mehr über den Zapfen 28 an der Arretiervorrichtung 12 eingreift, d.h. den Kontakt mit dem Zapfen 28 löst, drückt die Druckfeder 22 die Arretiervorrichtung 12 in die Ausgangsposition zurück. Dadurch wird zum einen die Nocke 40 in die Nut 44 gedrängt, wo sie beweglich einrastet. Zum anderen schwenkt das Einlaufblech 27 aufgrund des Seils 26 und der beiden Federn 25, 25' zurück in seine Ausgangsposition. Folglich stellen sich die Zinken 6 wieder auf und arretieren im arretierten Zustand.

Die Arretiervorrichtung 12 ist also derart ausgebildet ist, dass sie selbsttätig in den arretierten Zustand übergeht, wenn die Exzenterscheibe 20 von der Arretiervorrichtung 12 gelöst wird.

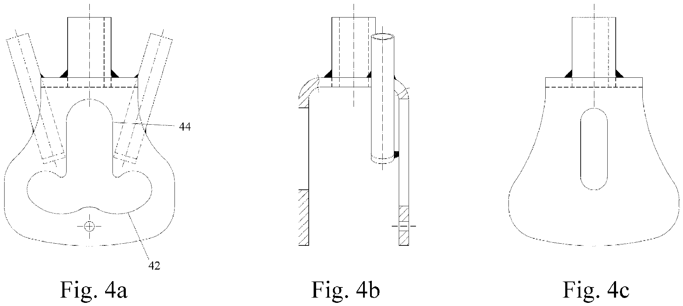

In Fig. 4a bis 4c sind drei Ansichten der Arretiervorrichtung 12 gezeigt, wobei in Fig. 4a die Nut 44 und Führung 42 der Arretiervorrichtung im Detail veranschaulicht ist. Die Führung 42 weist eine Krümmung auf, welche annähernd w-förmige oder ω-förmig ausgeformt ist. Beim Übergang vom normalen in den gedrückten Zustand der Druckfeder 22 legen sich die Zinken 6 bis zum höchsten Punkt der Exzenterscheibe 20 immer mehr an die Drehwelle an, da die Nocke 40, welche als Kurvenrolle ausgebildet ist, zwangsweise in die w-förmige oder ω-förmige Führung 42 der Arretiervorrichtung 12 hineingeführt wird. Dementsprechend werden die Zinken 6 durch die Form der Führung 42 der Arretiervorrichtung 12 und der darin geführten Nocke 40 an die Drehwelle angelegt. Nach dem Überfahren des höchsten Punktes der Exzenterscheibe 20, wird die Arretiervorrichtung 12 durch die Druckfeder 22 wieder nach Innen gedrückt. Dadurch rollt die Nocke 40 aus der Führung 42 der Arretiervorrichtung 12 in die Nut 44 der Arretiervorrichtung 12. Dies führt dazu, dass die Zinken 6 im arretierten Zustand arretieren. Wie bereits erwähnt sind die Zinken 6 im arretierten Zustand entlang der horizontalen Achse neigbar, vorzugsweise bis zu 12° neigbar. Durch eine solche Position nehmen die Zinken im Betrieb eine leicht schleppende Position ein.

Aufgrund der hohen Kräfte, die am Endlosband und an den Drehwellen auftreten sind an der Drehwelle zwei beabstandete Exzenterscheiben 20 und zwei beabstandete Zapfen 28 vorgesehen. Dies ist in Fig. 6a dargestellt. Ein annähernd U-förmig geformte Profil der Arretiervorrichtung 12 weist zwei gleich lange Schenkel auf, welche als Zapfen 28 ausgebildet sind. Die beiden Zapfen 28 werden gleichzeitig über die jeweilige Exzenterscheibe 20 geführt. Wie zuvor erwähnt greifen dadurch die Exzenterscheiben 20 in die Arretiervorrichtung 12 ein, sodass die Arretiervorrichtung 12 nach Außen gedrückt wird. Dementsprechend wird die Druckfeder 22 gespannt. Durch das gleichzeitige nach Außen drücken der beiden Zapfen 28 verklemmt sich das U-förmige Profil der Arretiervorrichtung 12 weniger. Dadurch wird weniger Kraft benötigt, sodass die Druckfedern 22 kleiner dimensioniert werden können, und der Verschleiß ist geringer.

## Patentansprüche

1. Fahrbarer Bandrechen, umfassend
• zumindest zwei Drehwellen (4), wobei die Drehachsen (D) der Drehwellen (4) entlang der Fahrtrichtung des Bandrechens ausgerichtet sind,
• zumindest ein Endlosband (2, 2'), wobei das Endlosband (2, 2`) um die zwei Drehwellen (4) drehbar gelagert ist,
• mehrere Zinken (6), wobei die Zinken (6) an Zinkenhaltern (8) befestigt sind, und
• obere und untere Zinkenträger (9, 9'), mit denen die Zinkenhalter (8) am Endlosband (2) befestigt sind,
**dadurch gekennzeichnet, dass**
die oberen Zinkenträger (9) jeweils eine Arretiervorrichtung (12) aufweisen, welche eine Nocke (40) und ein Einlaufblech (27) aufweist und mit welcher die am Zinkenhalter (8) befestigten Zinken (6) in einer aufrechten Position arretierbar sind,
wobei an zumindest einer Drehwelle (4) eine Auslösevorrichtung für die Arretiervorrichtung (12) vorgesehen ist, mit welcher die Arretiervorrichtung (12) derart lösbar ist, dass im gelösten Zustand das Einlaufblech (27) durch die Auslösevorrichtung schwenkbar ist, sodass die Nocke (40) in eine Führung (42) in der Arretiervorrichtung (12) einführbar ist und die Nocke (40) im gelösten Zustand entlang der Führung (42) bewegbar ist,
während im arretierten Zustand die Nocke (40) in eine Nut (44), welche an der Arretiervorrichtung (12) angeordnet ist, einrastbar ist.

2. Bandrechen nach Anspruch 1, **dadurch gekennzeichnet, dass** die Arretiervorrichtung (12) derart ausgebildet ist, dass sie selbsttätig in den arretierten Zustand übergeht, wenn die Auslösevorrichtung, welche vorzugsweise als Exzenterscheibe (20) ausgebildet ist, von der Arretiervorrichtung (12) gelöst wird.

3. Bandrechen nach Anspruch 1 oder 2, **dadurch gekennzeichnet, dass** die Arretiervorrichtung (12) im arretierten Zustand den Zinkenhalter (8) mittels einer Druckfeder (22) am Zinkenträger (9, 9') arretiert, wobei die Auslösevorrichtung eine Exzenterscheibe (20) umfasst, die an der Drehwelle angeordnet ist und die mit einem Zapfen (28) am Zinkenträger (9, 9') in Eingriff bringbar ist und die Druckfeder (22) drückt.

4. Bandrechen nach einem der Ansprüche 1 bis 3, **dadurch gekennzeichnet, dass** der Querschnitt der Nut (44) größer ist als der Querschnitt der Nocke (40), sodass die Nocke (40) im arretierten Zustand in der Nut (44) beweglich einrastbar ist.

5. Bandrechen nach einem der Ansprüche 1 bis 4, **dadurch gekennzeichnet, dass** die Nocke (40) als Kurvenrolle ausgebildet ist.

6. Bandrechen nach einem der Ansprüche 1 bis 5, **dadurch gekennzeichnet, dass** die Führung (42) eine Krümmung aufweist, welche annähernd w-förmig oder ω-förmig ausgebildet ist.

7. Bandrechen nach einem der Ansprüche 1 bis 6, **dadurch gekennzeichnet, dass** im arretierten Zustand das Einlaufblech (27) mittels zwei Federn (25, 25') und einem Seil (26) zurück in die Ausgangsposition schwenkbar ist, sodass das Einlaufblech (27) in einer aufrechten Position an der Innenseite der Arretiervorrichtung (12) absteht.

8. Bandrechen nach Anspruch 7, **dadurch gekennzeichnet, dass** die beiden Federn (25, 25') eine annähernd gleiche Federkonstante aufweisen.

9. Bandrechen nach einem der Ansprüche 1 bis 8, **dadurch gekennzeichnet, dass** zumindest zwei Räder vorgesehen sind, wobei die Drehachse der Räder senkrecht zur Fahrtrichtung des Bandrechens angeordnet ist.

10. Bandrechen nach einem der Ansprüche 1 bis 9, **dadurch gekennzeichnet, dass** der Bandrechen eine integrierte Antriebseinheit aufweist.

11. Bandrechen nach einem der Ansprüche 1 bis 10, **dadurch gekennzeichnet, dass** ein Seitenblech vorgesehen, welches parallel zur Fahrtrichtung seitlich des Endlosbands (2, 2') angeordnet ist.

12. Bandrechen nach einem der Ansprüche 2 bis 11, **dadurch gekennzeichnet, dass** an der Drehwelle (4) beabstandete Exzenterscheiben (20) und beabstandete Zapfen (28) am Zinkenträger (9, 9') vorgesehen sind.

13. Bandrechen nach einem der Ansprüche 1 bis 12, **dadurch gekennzeichnet, dass** die Druckfeder (22) eine Spiralfeder mit einem in der Achse der Spiralfeder angeordneten Stift (24) aufweist.
